# EUROPÄISCHE PATENTANMELDUNG

(11) **EP 1 002 965 A1**
(43) Veröffentlichungstag der Anmeldung: **24.05.2000**
(21) Anmeldenummer: 98121957.9
(22) Anmeldetag: 19.11.1998
(51) Int. Cl.: F16C 37/00, F16C 17/00

(54) **Kühlbares Lager**

(71) Anmelder: SIEMENS AKTIENGESELLSCHAFT, 80333 München (DE)
(72) Erfinder: Becker, Bernard Dr.Ing., 45481 Mülheim (DE)

(57) **Zusammenfassung**

Die Erfindung betrifft ein Lager (1) mit einem Lagerkörper (3), das durch in dem Lagerkörper (3) verlaufende Strömungswege (31,33) mit einem Kühlfluid (40) kühlbar ist. Die Erfindung betrifft insbesondere ein Lager (1) für eine Turbomaschinenwelle (25).

## Beschreibung

Die Erfindung betrifft ein kühlbares Lager mit einem Lagerkörper, der eine Gleitfläche zur gleitenden Anlage eines zu lagernden Körpers aufweist. Insbesondere betrifft die Erfindung ein Turbomaschinenlager.

In dem Buch 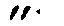 Radialgleitlager" von Lang/Steinhilper, Springer-Verlag Berlin, 1978, werden auf Seite 326 Turbinenlager beschrieben. Im Bild 10.14 auf Seite 326 ist die Lagerung einer Turbinenwelle in einem Radialgleitlager dargestellt. Das Radialgleitlager ist als ein Kippsegmentlager ausgeführt. Bei einem solchen Kippsegmentlager ist die Turbinenwelle mit einzelnen, kippbaren Lagersegmenten gelagert. Dem Lager wird als Schmierstoff Öl zugeführt. Die Ölzufuhr erfolgt über einen Ringkanal in einem Lagerring, in welchem die Kippsegmente gehaltert sind. Über jeweils eine Ölbohrung wird das Öl von dem Ringkanal durch die Segmente zu einer Eintrittskante der Kippsegmente geleitet. Von dort gelangt das Öl in einen Spalt zwischen der Turbinenwelle und den Kippsegmenten. Kritische Betriebszustände des Lagers äußern sich in einem Anstieg der Lagertemperatur. Zur Überwachung der Lagertemperatur werden Thermoelemente eingebaut.

Hydrodynamische Axiallager werden auf Seite 359 im gleichen Buch beschrieben. Solche Axiallager dienen der Aufnahme von Schubkräften z. B. durch eine Turbinenwelle. Auch Axiallager sind häufig als Kippsegmentlager ausgeführt, wie z. B. im Bild 10.35 auf Seite 361 erkennbar.

Aufgabe der Erfindung ist die Angabe eines hochbeanspruchbaren Lagers.

Erfindungsgemäß wird diese Aufgabe gelöst durch ein Lager mit einem Lagerkörper, der eine Gleitfläche zur gleitenden Anlage eines zu lagernden Körpers aufweist, wobei im Lagerkörper Strömungswege für ein Kühlfluid so vorgesehen sind, daß die Gleitfläche durch das Kühlfluid kühlbar ist.

Die Kühlung eines Gleitlagers erfolgte bisher durch ein Schmiermittel, welches den Lagerkörper unströmt. Durch die auftretenden Lagerkräfte werden das Schmiermittel und der Lagerkörper erwärmt. Wird diese Erwärmung zu stark, kann es zu einer Beschädigung des Lagerkörpers kommen. Zum Beispiel kann der Schmelzpunkt einer Lagerbeschichtung überschritten werden.

Es wird nun zusätzlich zu einer Kühlung durch ein den Lagerkörper umströmendes Schmiermittel eine Innenkühlung des Lagerkörpers vorgesehen. Das durch die Strömungswege im Inneren des Lagerkörpers strömende Kühlfluid kann dabei ein von dem Schmierstoff verschiedenes Fluid aber auch ein mit dem Schmierstoff identisches Fluid sein. Vorzugsweise ist das Kühlfluid Öl, welches auch als Schmierstoff verwendet wird.

Die zusätzliche Innenkühlung durch das Kühlfluid ermöglicht eine erhöhte Aufnahme von durch Reibung im Lager dissipierter Energie. Das Lager wird somit gegenüber einer reinen Außenkühlung des Lagerkörpers höher belastbar, da die durch die Reibung erzeugte Wärme besser abgeführt wird und es somit zu einer geringeren Temperaturerhöhung kommt.

Vorzugsweise sind die Strömungswege als entlang jeweils einer Kanallinie gerichtete Kühlkanäle mit jeweils einer Kanalwand ausgebildet. Der Lagerkörper weist als Kühlkanäle, z. B. zylindrische Bohrungen auf, durch die das Kühlfluid strömt.

Bevorzugt verlaufen die Strömungswege in einem von Stützelementen durchsetzten Strömungsraum. Die Strömungswege sind also nicht durch voneinander separierte Kanäle gebildet, sondern verlaufen in einem Strömungsraum. Alle Punkte in diesem Strömungsraum sind untereinander strömungstechnisch verbunden. Ein solcher Strömungsraum wird z. B. durch eine doppelwandige Struktur des Lagerkörpers gebildet, wobei ein gleitflächenseitiger Teil des Lagerkörpers und ein diesem Teil gegenüberliegender rückseitiger Teil des Lagerkörpers einen spaltförmigen Strömungsraum einschließen. Zur Aufnahme der auf die Gleitfläche ausgeübten Lagerkräfte werden die beiden Lagerkörperteile durch die Stützelemente miteinander verbunden. Durch den Strömungsraum strömt an den Stützelementen vorbei das Kühlfluid und kühlt die Gleitfläche.

Bevorzugtermaßen verlaufen die Strömungswege parallel zur Gleitfläche. Damit sind die Strömungswege in jedem Punkt zur Gleitfläche gleich beabstandet, so daß eine gleichmäßige Kühlung der Gleitfläche ermöglicht wird.

Im Lagerkörper ist während eines Betriebes durch eine Biegebeanspruchung eine mechanische Spannung erzeugbar. Dabei liegt im Inneren des Lagerkörpers ein Bereich minimaler mechanischer Spannung. Vorzugsweise verlaufen die Strömungswege in diesem Bereich minimaler mechanischer Spannung. Damit ist gewährleistet, daß die mechanische Beanspruchbarkeit des Lagerkörpers durch die Strömungswege nicht beeinträchtigt wird.

Bevorzugt ist ein erster Teil zueinander paralleler Strömungswege und ein zweiter Teil zueinander paralleler Strömungswege vorgesehen, wobei der erste Teil quer, insbesondere senkrecht zum zweiten Teil verläuft. Dies entspricht einem durch die Strömungswege gebildeten Gitter. Ein solches Gitter zueinander quer verlaufender Strömungswege gewährt eine besonders effiziente Kühlung der Gleitfläche.

Bevorzugt sind entlang zumindest einem Teil der Strömungswege Kühlrippen angeordnet. Durch die Kühlrippen wird die Oberfläche der Strömungswege vergrößert. Dies führt zu einem verbesserten Wärmeübertrag zwischen dem Kühlfluid und der Umgebung der Strömungswege. Damit wird eine verbesserte Kühlung der Gleitfläche erreicht. Bevorzugtermaßen sind quer, vorzugsweise senkrecht zumindest zu einem Teil der Strömungswege Turbulatoren zur Erzeugung von Turbulenz im Kühlfluid angeordnet. Durch die Erzeugung von Turbulenz mittels quer zur Strömungsrichtung des Kühlfluides verlaufenden Turbulatoren wird ebenfalls ein verbesserter Wärmeübertrag zwischen dem Kühlfluid und der Umgebung der Strömungswege erreicht.

Bevorzugt ist zumindest ein Teil der Strömungswege gewunden, insbesondere serpentinenartig. Durch eine gewundene Führung der Strömungswege kann auch mit einer vergleichsweise geringen Zahl an Strömungswegen eine erhebliche Fläche gekühlt werden. Außerdem kann durch eine geeignete Führung der Strömungswege eine an die vorliegende Wärmeverteilung im Lagerkörper angepaßte Kühlung erfolgen. Eine solche Anpassung an eine Wärmeverteilung im Lagerkörper ist vorzugsweise auch dadurch erreichbar, daß ein Teil der Strömungswege eine sich entlang dem jeweiligen Strömungsweg ändernde Querschnittsfläche aufweist. Zum Beispiel kann ein Strömungsweg, der sich vom Rand des Lagerkörpers in dessen Inneres erstreckt, eine sich vom Rand zum Inneren vergrößernden Querschnittsfläche aufweisen. Durch die größere Querschnittsfläche im Inneren wird dort eine verstärkte Kühlung durch das Kühlfluid erreicht. Der Rand des Lagerkörpers kann z. B. dann mit einer geringeren Kühlung auskommen, wenn er durch eine Umströmung mit dem Schmiermittel gekühlt ist.

Vorzugsweise ist der Lagerkörper aus mindestens zwei Teilen zusammensetzbar, wobei in einer Oberfläche von mindestens einem der Teile Nuten so eingebracht sind, daß durch diese Nuten die Strömungswege im zusammengesetzten Lagerkörper gebildet werden. Diese Ausgestaltung läßt insbesondere auch eine kompliziertere Gestaltung der Strömungswege in fertigungstechnisch vergleichsweise einfacher Weise zu. Zum Beispiel kann ein serpentinenartiger Verlauf der Nuten oder ein sich ändernder Querschnitt der Nuten in die Oberfläche gefräst werden. Die Nuten liegen nach einem Zusammenfügen der Lagerkörperteile im Inneren des Lagerkörpers und bilden die Strömungswege. Auch die Ausbildung von Kühlrippen oder Turbulatoren in den Strömungswegen ist auf diese Weise fertigungstechnisch einfach möglich.

Vorzugsweise ist das Lager als Axiallager ausgeführt. Bevorzugt ist das Lager als Radiallager ausgeführt. Das Radiallager kann z. B. als Laufbuchse ausgeführt sein. Dabei können sich die Strömungswege z. B. in Umfangsrichtung im Inneren des Lagerkörpers entlang der Gleitfläche erstrecken. Sie können aber auch z. B. entlang der axialen Richtung verlaufen. Das Radiallager kann auch aus zwei oder mehr Lagerschalen aufgebaut sein.

Bevorzugt ist der Lagerkörper ein Kippsegment. Jedes Kippsegment eines Lagers stellt ein unabhängiges Bauteil dar, welches sich an den zu lagernden Körper anfügt. Bei einem horizontal angeordneten Radiallager trägt nur ein Teil der Kippsegmente die durch das Gewicht des zu lagernden Körpers auftretenden wesentlichen Lagerkräfte. Vorzugsweise weisen nur diese tragenden Kippsegmente Strömungswege in ihrem Inneren auf. Bei einem Axiallager sind vorzugsweise alle Kippsegmente durch innere Strömungswege mittels eines Kühlfluids kühlbar.

Weiter bevorzugt weist das Kippsegment eine der Gleitfläche gegenüberliegende Rückseite und eine zwischen Gleitfläche und Rückseite liegende Seitenfläche auf, wobei die Strömungswege von einer Seitenfläche zu einer anderen Seitenfläche durch das Kippsegment hindurch verlaufen. Auf diese Weise wird insbesondere in einfacher Weise erreicht, daß das die Kippsegmente umströmende Schmiermittel gleichzeitig als Kühlfluid verwendbar ist. Das Schmiermittel, insbesondere Öl, tritt durch die durch das Kippsegment verlaufenden Strömungswege hindurch. Ein dazu nötiger Druckgradient wird vorzugsweise dadurch aufgebaut, daß die Strömungswege in Richtung einer Drehrichtung eines sich drehenden, zu lagernden Körpers gerichtet sind. Ein Druckgradient für das Kühlfluid wird z. B. auch mittels einer Fliehkraft dadurch aufgebaut, daß sich die Strömungswege bezüglich einer Drehachse des zu lagernden Körpers radial nach außen erstrecken.

Vorzugsweise ist das Lager als Turbomaschinenlager ausgeführt. Bei Turbomaschinen treten besonders hohe Kräfte auf, so daß hier eine Verbesserung der Belastbarkeit der Lager durch eine innere Kühlung der Lagerkörper von besonderem Vorteil ist. Vorzugsweise ist die Turbomaschine eine Gas- oder Dampfturbine oder ein Turbogenerator.

Ausführungsbeispiele der Erfindung werden anhand der Zeichnung näher erläutert. Es zeigen teilweise schematisch und nicht maßstäblich:
- Figur 1: eine Aufsicht auf ein Axiallager mit Kippsegmenten,
- Figur 2: einen Querschnitt durch ein Radiallager mit Kippsegmenten,
- Figur 3: einen Querschnitt durch eine Lagerschale,
- Figur 4: einen Längsschnitt durch ein Kippsegment eines Axiallagers,
- Figur 5: in einem Strömungsraum mit Stützelementen verlaufende Strömungswege,
- Figur 6: einen Querschnitt durch einen Lagerkörper mit einem innenliegenden Strömungsraum,
- Figur 7: einen zweiteiligen Lagerkörper,
- Figur 8: serpentinenartig verlaufende Strömungswege in einem Lagerkörper,
- Figur 9: einen Strömungsweg mit unterschiedlicher Querschnittsfläche in einem Lagerkörper,
- Figur 10: einen Strömungsweg mit einer Kühlrippe und einem Turbulator und
- Figur 11: einen Querschnitt durch einen biegebeanspruchten Lagerkörper.

Gleiche Bezugszeichen haben in den verschiedenen Figuren die gleiche Bedeutung.

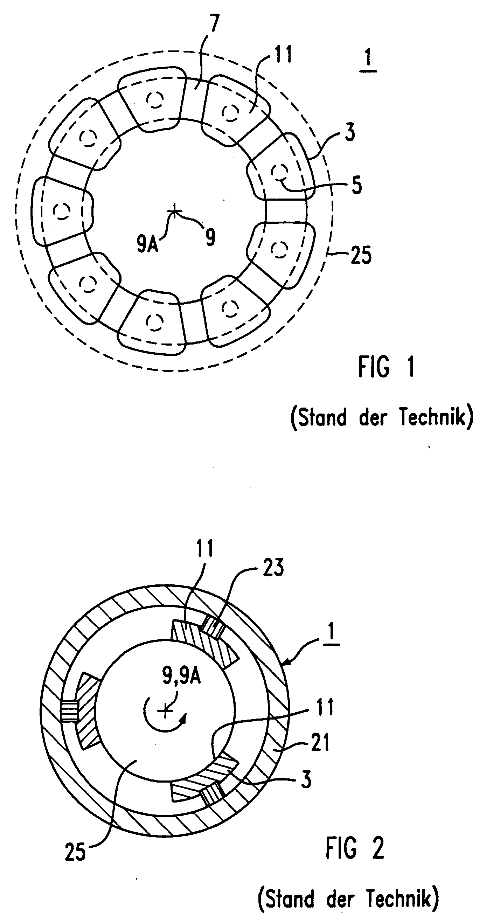

Figur 1 zeigt eine Aufsicht auf ein als Kippsegmentlager ausgeführtes Axiallager 1 gemäß dem Stand der Technik. Kippsegmente 3 sind kippbeweglich mittels Stützknöpfen 5 in Umfangsrichtung äquidistant auf einem Tragring 7 befestigt. Das Lager 1 ist dabei symmetrisch um eine Achse 9. Jedes Kippsegment 3 ist ein Lagerkörper 3 des Lagers 1 und weist eine Gleitfläche 11 auf. An den Gleitflächen 11 gleitet drehend ein zu lagernder Körper 25 (siehe Figur 2), z. B. eine Turbinenwelle. Eine Rotationsachse 9A des zu lagernden Körpers 25 ist parallel zur Achse 9 und senkrecht zu jeder Gleitfläche 11. Die Gleitflächen 11 sind Ebenen.

Figur 2 zeigt einen Querschnitt durch ein als Kippsegmentlager ausgeführtes Radiallager 1 gemäß dem Stand der Technik. An einem Tragring 21 sind mittels Befestigungselementen 23 äquidistant entlang einer Umfangsrichtung des Tragrings 21 als Kippsegmente ausgeführte Lagerkörper 3 befestigt. Jeder der Lagerkörper 3 weist eine Gleitfläche 11 auf. Durch die Lagerkörper 3 wird eine Turbinenwelle 25 gelagert. Im Unterschied zum Axiallager gemäß Figur 1 ist jede Gleitfläche 11 parallel zur Rotationsachse 9 der Turbinenwelle 25 gerichtet. Außerdem ist jede Gleitfläche 11 kreissegmentförmig gekrümmt.

Durch Reibung wird jedes Lager 1 im Betrieb erwärmt. Beim Auftreten großer Lagerkräfte kann diese Erwärmung so groß werden, daß die Temperatur des Lagers einen kritischen Wert übersteigt. Diese kritische Temperatur kann z. B. die Schmelztemperatur eines Lagerwerkstoffes sein. Bei Gleitlagern kommt üblicherweise ein Schmierstoff zum Einsatz, welcher die Reibung vermindernd zwischen dem Lagerkörper 3 und dem zu lagernden Körper 25 einen Schmierfilm ausbildet. Durch den Schmierstoff wird in der Regel auch eine Kühlung erreicht.

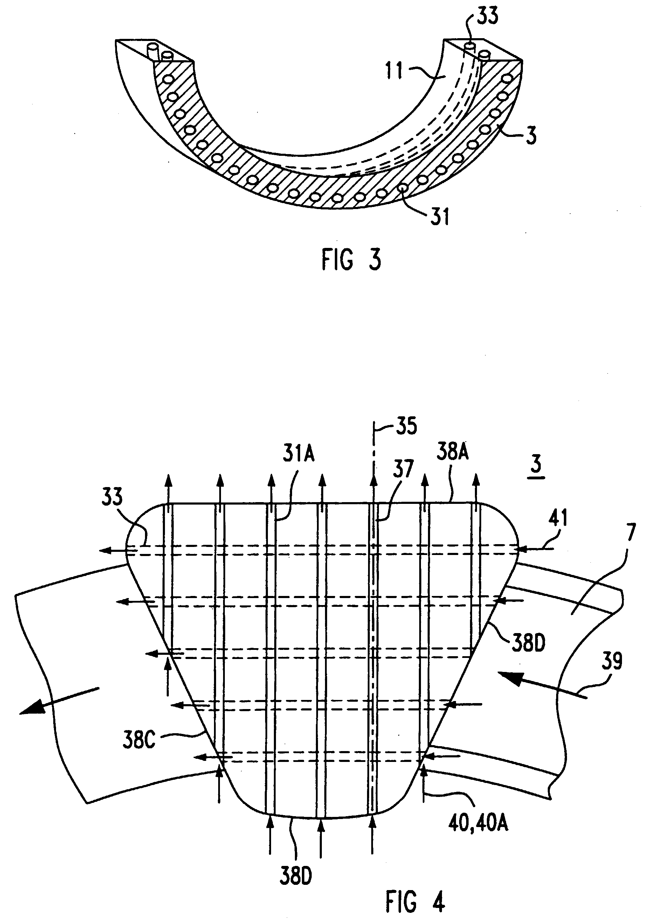

Fig. 3 zeigt einen Querschnitt durch einen als Lagerschale 3 ausgeführten Lagerkörper 3. Die Innenseite der Lagerschale 3 bildet eine Gleitfläche 11 für einen zu lagernden Körper. Parallel zur Gleitfläche 11 wird der Lagerkörper 3 von Strömungswegen 31, 33 durchsetzt. Ein erster Teil 31 der Strömungswege ist in axialer Richtung und ein zweiter Teil 33 der Strömungswege in Umfangsrichtung der Lagerschale 3 gerichtet. Jeder der Strömungswege 31, 33 verläuft dabei parallel zur Gleitfläche 11. Mittels eines durch die Strömungswege 31, 33 fließenden Kühlfluides 40 (siehe z. B. Figur 4), z. B. Öl, welches auch als Schmierstoff verwendet wird, wird die Gleitfläche 11 gekühlt. Damit kann der Lagerkörper 3 eine größere Wärmemenge aufnehmen, ohne daß es zu einer unzulässig hohen Erwärmung kommt. Ein aus solchen Lagerschalen 3 aufgebautes Lager 1 ist somit gegenüber einem Lager ohne Innenkühlung höher belastbar.

Figur 4 zeigt einen Längsschnitt durch einen als ein Kippsegment ausgebildeten Lagerkörper 3 eines Axiallagers. Der Lagerkörper 3 ist entsprechend Figur 1 auf einem Tragring 7 angeordnet. Bezüglich des Tragrings 7 wird der Lagerkörper 3 radial von einem ersten Teil 31 von Strömungswegen durchzogen. Ein zweiter Teil 33 der Strömungswege führt bezüglich des Tragrings 7 in Umfangsrichtung durch den Lagerkörper 3. Durch die Strömungswege 31, 33 wird somit ein quadratisches Gitter gebildet. Die Strömungswege 31, 33 sind durch zylindrische Bohrungen gebildet. Der zweite Teil 33 und der erste Teil 31 der Strömungswege liegen in unterschiedlichen Ebenen und schneiden sich somit nicht.

Bei Rotation entlang einer Rotationsrichtung 39 eines zu lagernden, hier nicht näher dargestellten Körpers, z. B. einer Turbinenwelle an der hier nicht sichtbaren Gleitfläche 11 des Lagerkörpers 3 entsteht ein Druckgefälle für einen den Lagerkörper 3 umströmenden Schmierstoff 40A, der gleichzeitig als Kühlfluid 40 fungiert. Dieses Druckgefälle führt in Umfangsrichtung des Tragringes 7 von einer ersten Seitenfläche 38d des Lagerkörpers 3 zu einer zweiten Seitenfläche 38c des Lagerkörpers 3. Dadurch wird der Schmierstoff 40A, z. B. Öl, als Kühlfluid 40 durch den zweiten Teil 33 der Strömungswege hindurchgepreßt. Außerdem kommt es durch Fliehkräfte zu einem Druckgefälle zwischen einer bezüglich des Tragringes 7 innenliegenden Seitenfläche 38b des Lagerkörpers 3 zu einer bezüglich des Tragrings 7 außenliegenden vierten Seitenfläche 38a des Lagerkörpers 3. Dadurch wird der Schmierstoff 40A als Kühlfluid 40 ebenfalls durch den ersten Teil 31 der Strömungswege hindurchgepreßt.

Jeder Strömungsweg 31, 33 ist entlang einer jeweiligen Kanallinie 35 gerichtet und weist eine jeweilige Kanalwand 37 auf.

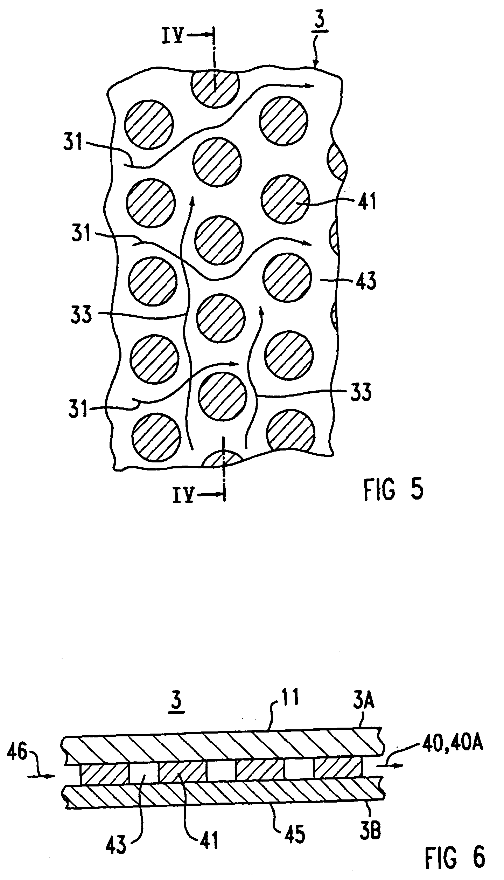

Figur 5 zeigt einen Ausschnitt eines Querschnittes durch einen Lagerkörper 3. Im Lagerkörper 3 ist ein spaltförmiger Strömungsraum 43 vorgesehen. Im Strömungsraum 43 sind zylindrische Stützelemente 41 angeordnet. Zwischen den Stützelementen 41 führen durch den Strömungsraum 43 Strömungswege 31, 33 für ein Kühlfluid 40.

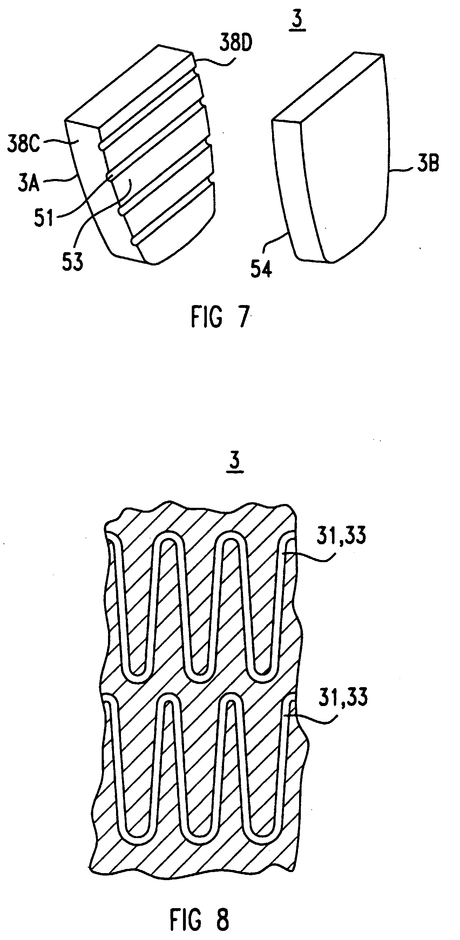

In Figur 6 wird die Anordnung des Strömungsraums 43 im Lagerkörper 3 deutlich. Figur 6 ist ein Längsschnitt durch den Ausschnitt des Lagerkörpers 3 aus Figur 5. Der Strömungsraum 43 verläuft zwischen einem ersten, die Gleitfläche 11 bildenden Teil 3a des Lagerkörpers 3 und einem zweiten, der Gleitfläche 11 gegenüberliegenden, die Rückseite 55 bildenden Teil 3b des Lagerkörpers 3. Der erste Teil 3a und der zweite Teil 3b des Lagerkörpers 3b sind durch die Stützelemente 41 miteinander verbunden. Durch die Stützelemente 41 wird die Belastbarkeit des Lagerkörpers 3 gewährleistet. Durch im Strömungsraum 43 strömendes Kühlfluid 40 wird die Gleitfläche 11 effektiv gekühlt.

Figur 7 zeigt einen aus zwei Teilen 3a, 3b aufgebauten Lagerkörper 3. Der erste Teil 3a weist eine Oberfläche 53 auf, in die von einer ersten Seitenfläche 38c zu einer gegenüberliegenden Seitenfläche 38d des Lagerkörpers 3 führende Nuten 51 eingefräst sind. Der zweite Teil 3b des Lagerkörpers 3 wird mit einer Anlagefläche 54 auf die Oberfläche 53 angefügt. Dadurch liegen die Nuten 51 im Inneren des so zusammengefügten Lagerkörpers 3. Durch die Nuten 51 werden damit die Strömungswege 31, 33 gebildet. Die Strömungswege 31, 33 sind durch einen solchen mehrteiligen Aufbau des Lagerkörpers 3 besonders einfach zu fertigen. Insbesondere ist es auch möglich, kompliziertere Verläufe oder Strukturen der Strömungswege 31, 33 zu fertigen. Zum Beispiel können serpentinenartige, gewundene Strömungswege 31, 33 als Nuten 51 in die Oberfläche 53 eingebracht werden. Eine solche Ausführung ist in Figur 8 dargestellt.

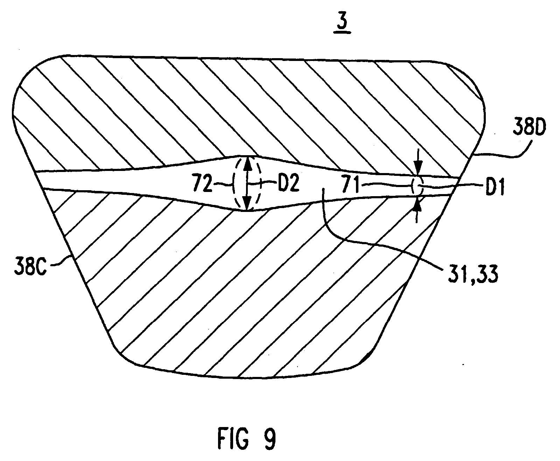

Figur 9 zeigt einen in einem Lagerkörper 3 verlaufenden Strömungsweg 31, 33 mit unterschiedlichen Querschnittsflächen F1, F2. Es ist beispielhaft nur ein einziger Strömungsweg 31, 33 dargestellt. Der Strömungsweg 31, 33 führt von einer ersten Seitenfläche 38c des Lagerkörpers 3 zu einer zweiten Seitenfläche 38d. Im Inneren des Lagerkörpers 3 erweitert sich der Strömungsweg 31, 33. Eine erste Querschnittsfläche F1 im Bereich der Seitenfläche 38d ist somit kleiner als eine zweite Querschnittsfläche F2 in der Mitte des Strömungsweges 31, 33. Mittels unterschiedlicher Querschnittsflächen entlang der Strömungswege 31, 33 kann z. B. eine Kühlung angepaßt an eine bestimmte Wärmeverteilung im Lagerkörper 3 während des Betriebes erreicht werden. Eine solche Anpassung an eine Wärmeverteilung im Lagerkörper 3 könnte auch dadurch erreicht werden, daß sich die Dichte der Strömungswege entlang der Gleitfläche 11 verändert. Außerdem ist denkbar, Strömungswege 31, 33 mit zueinander unterschiedlichen Querschnittsflächen F vorzusehen.

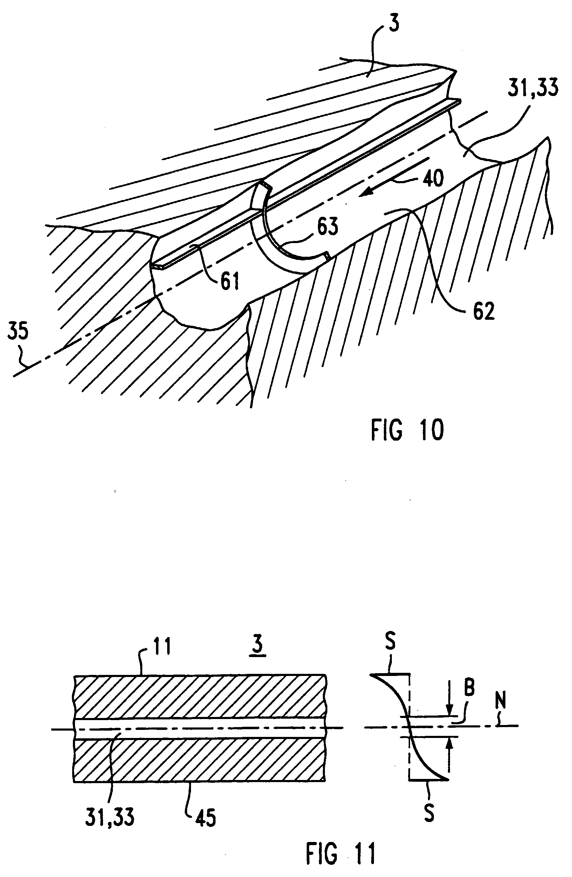

In Figur 10 ist ein im Lagerkörper 3 verlaufender Strömungsweg 31, 33 dargestellt. Der Strömungsweg 31, 33 ist als ein entlang einer Kanallinie 35 gerichteter Kanal mit einer Kanalwand 62 ausgebildet. Im Strömungsweg 31, 33 ist eine entlang der Kanallinie 35 gerichtete Kühlrippe 61 angeordnet. Es können auch weitere Kühlrippen 61 vorgesehen sein. Durch die Kühlrippe 61 wird die Oberfläche des Strömungsweges 31, 33 vergrößert. Dies führt zu einem verbesserten Wärmeübergang zwischen dem Kühlfluid 40 und der Umgebung des Strömungswegs 31, 33. Senkrecht zur Kanallinie 35 ist dem Strömungsweg 31, 33 ein ringförmiger Turbulator angeordnet. Durch diesen Turbulator 63 wird im Kühlfluid 40 Turbulenz erzeugt. Dies verbessert ebenfalls den Wärmeübergang zwischen der Umgebung des Strömungswegs 31, 33 und dem Kühlfluid 40.

Figur 11 zeigt einen Querschnitt durch einen Lagerkörper 3, in dem während des Betriebes durch eine Biegebeanspruchung eine Spannung S hervorgerufen wird. Die Spannung S ist im Bereich der Gleitfläche 11 und im Bereich der Rückseite 45 des Lagerkörpers 3 maximal. Im Inneren des Lagerkörpers drei gibt es einen Bereich B einer minimalen Spannung S. Dieser Bereich B liegt um eine neutrale Faser N, bei der die Spannung S Null ist. Im Bereich B ist ein Strömungsweg 31, 33 angeordnet. Durch die Anordnung des Strömungsweges 31, 33 im Bereich B wird die Stabilität und Beanspruchbarkeit des Lagerkörpers 3 praktisch nicht beeinflußt, da hier keine nennenswerten mechanischen Spannungen durch die Biegebeanspruchung auftreten.

## Patentansprüche

1. Lager (1) mit einem Lagerkörper (3), der eine Gleitfläche (11) zur gleitenden Anlage eines zu lagernden Körpers (25) aufweist,
**dadurch gekennzeichnet,** daß im Lagerkörper (3) Strömungswege (31, 33) für ein Kühlfluid (40) so vorgesehen sind, daß die Gleitfläche (11) durch das Kühlfluid (40) kühlbar ist.

2. Lager (1) nach Anspruch 1,
**dadurch gekennzeichnet,** daß die Strömungswege (31, 33) als entlang jeweils einer Kanallinie (35) gerichtete Kühlkanäle (31, 33) mit jeweils einer Kanalwand (62) ausgebildet sind.

3. Lager (1) nach Anspruch 1 oder 2,
**dadurch gekennzeichnet,** daß die Strömungswege (31, 33) in einem von Stützelementen (41) durchsetzten Strömungsraum (43) verlaufen.

4. Lager (1) nach Anspruch 1, 2 oder 3,
**dadurch gekennzeichnet,** daß die Strömungswege (31, 33) parallel zur Gleitfläche (11) verlaufen.

5. Lager (1) nach einem der vorhergehenden Ansprüche,
**dadurch gekennzeichnet,** daß im Lagerkörper (3) während eines Betriebes durch eine Biegebeanspruchung eine mechanische Spannung (S) erzeugbar ist, wobei im Inneren des Lagerkörpers (3) ein Bereich (B) minimaler mechanischer Spannung (S) vorliegt und wobei die Strömungswege (31, 33) in diesem Bereich minimaler mechanischer Spannung S verlaufen.

6. Lager (1) nach einem der vorhergehenden Ansprüche,
**dadurch gekennzeichnet,** daß ein erster Teil (31) zueinander paralleler Strömungswege (31) und ein zweiter Teil (33) zueinander paralleler Strömungswege (33) vorgesehen sind, wobei der erste Teil (31) senkrecht zum zweiten Teil (33) verläuft.

7. Lager (1) nach einem der vorhergehenden Ansprüche,
**dadurch gekennzeichnet,** daß entlang zumindest einem Teil der Strömungswege (31, 33) Kühlrippen (61) angeordnet sind.

8. Lager (1) nach einem der vorhergehenden Ansprüche,
**dadurch gekennzeichnet,** daß senkrecht zu zumindest einem Teil der Strömungswege (31, 33) Turbulatoren (63) zur Erzeugung von Turbulenz im Kühlfluid (40) angeordnet sind

9. Lager (1) nach einem der vorhergehenden Ansprüche,
**dadurch gekennzeichnet,** daß zumindest ein Teil der Strömungswege (31, 33) gewunden ist, insbesondere serpentinenartig.

10. Lager (1) nach einem der vorhergehenden Ansprüche,
**dadurch gekennzeichnet,** daß zumindest ein Teil der Strömungswege (31, 33) eine sich ändernde Querschnittsfläche (F) aufweist.

11. Lager (1) nach einem der vorhergehenden Ansprüche,
**dadurch gekennzeichnet,** daß der Lagerkörper (3) aus mindestens zwei Teilen (3A, 3B) zusammensetzbar ist, wobei in eine Oberfläche (53) von mindestens einem der Teile (3A, 3B) Nuten (51) so eingebracht sind, daß durch diese Nuten (51) die Strömungswege (31, 33) im zusammengesetzten Lagerkörper (3) gebildet werden.

12. Lager (1) nach einem der vorhergehenden Ansprüche,
**gekennzeichnet durch** eine Ausführung als Axiallager.

13. Lager (1) nach einem der vorhergehenden Ansprüche,
**gekennzeichnet durch** eine Ausführung als Radiallager.

14. Lager (1) nach Anspruch 12 oder 13,
**dadurch gekennzeichnet,** daß der Lagerkörper (3) ein Kippsegment ist.

15. Lager (1) nach Anspruch 14,
**dadurch gekennzeichnet,** daß das Kippsegment (3) eine der Gleitfläche (11) gegenüberliegende Rückseite (45) und zwischen Gleitfläche (11) und Rückseite (45) liegende Seitenflächen (38A, 38B, 38C, 38D) aufweist, wobei die Strömungswege (31, 33) von einer Seitenfläche (38A, 38C) zu einer anderen Seitenfläche (38B, 38D) durch das Kippsegment (3) hindurch verlaufen.

16. Lager (1) nach einem der vorhergehenden Ansprüche,
**gekennzeichnet durch** eine Ausführung als Turbomaschinenlager.
